# EUROPÄISCHE PATENTANMELDUNG

(11) **EP 4 520 527 A1**
(43) Veröffentlichungstag der Anmeldung: **12.03.2025**
(21) Anmeldenummer: 24195769.5
(22) Anmeldetag: 22.08.2024
(51) Int. Cl.: B32B 27/20, B32B 7/023, B32B 27/08, B32B 27/32

(54) **MEHRSCHICHTVERBUND**

(30) Priorität: 05.09.2023 DE 102023208562
(71) Anmelder: Benecke-Kaliko AG, 30419 Hannover (DE)
(72) Erfinder: Mani, Joseph, 30419 Hannover (DE); Malner, Thomas, 30419 Hannover (DE); Neddenriep, Greta Luisa Henrike, 30175 Hannover (DE)
(74) Vertreter: Continental Corporation

(57) **Zusammenfassung**

Die Erfindung betrifft einen Mehrschichtverbund aufweisend mindestens eine erste Schicht und eine zweite Schicht, wobei die zweite Schicht oberhalb der ersten Schicht angeordnet ist und wobei die zweite Schicht transparent ist, dadurch gekennzeichnet, dass die erste Schicht mindestens ein thermoplastisches Polymer und eine Cellulose-Mischung umfasst. Der erfindungsgemäße Mehrschichtverbund zeichnet sich durch eine höhere Nachhaltigkeit aus und einen reduzierten Oberflächenglanz aus.

## Beschreibung

Die vorliegende Erfindung betrifft einen Mehrschichtverbund aufweisend mindestens eine erste Schicht und eine zweite Schicht, wobei die zweite Schicht oberhalb der ersten Schicht angeordnet ist und wobei die zweite Schicht transparent ist. Außerdem betrifft die Erfindung die Verwendung einer Cellulose-Mischung zur Herstellung eines Mehrschichtverbunds.

Der Nachhaltigkeitsaspekt gewinnt in der heutigen Zeit weltweit eine immer größere Bedeutung. Es wird verstärkt ein Angebot an nachhaltigeren Konsumgütern gefordert, auch in der Automobilindustrie. Zudem sind nachhaltigere Produkte essenziell für eine Verringerung des CO₂-Ausstoßes, um so einen positiven Beitrag zum Klimawandel beizutragen.

Naturfaser-Komposite weisen hohe mechanische Eigenschaften, ein geringeres Gewicht aufgrund der geringeren Dichte, sowie gute thermische und akustische Isolationseigenschaften auf. Allerdings gehen von den Naturfasern auch Probleme aus, wie die Inkompatibilität zwischen den Fasern und der Polymermatrix, Tendenz Agglomerate zu bilden und die geringe Dimensions- oder Formstabilität der Komposite aufgrund der Feuchtigkeitsaufnahme.

Ziel der vorliegenden Erfindung ist es Mehrschichtverbundsysteme beinhaltend Naturfaser-Komposite bereitzustellen, die trotz der genannten Nachteile durch Naturfasern positiv verändert werden und zu Kompositen, die mit synthetischen Füllstoffen versehen sind, vergleichbare oder sogar verbesserte mechanische Eigenschaften aufweisen und so unter dem Nachhaltigkeitsaspekt optimiert sind.

Überraschenderweise hat sich herausgestellt, dass die vorstehend genannte Aufgabe durch einen Mehrschichtverbund gemäß Anspruch 1 gelöst wird.

Erfindungsgemäß wird ein Mehrschichtverbund aufweisend mindestens eine erste Schicht und eine zweite Schicht, wobei die zweite Schicht oberhalb der ersten Schicht angeordnet ist und wobei die zweite Schicht transparent ist, dadurch gekennzeichnet, dass die erste Schicht mindestens ein thermoplastisches Polymer und eine Cellulose-Mischung umfasst bereitgestellt.

Überraschenderweise hat sich herausgestellt, dass eine Cellulose-Mischung in einer thermoplastischen Polymermatrix auf übliche Weise (z.B. mittels Extruder) verarbeitet werden kann und zu einem Naturstoff-Komposit - nämlich der ersten Schicht - führt, ohne die Materialeigenschaften der Polymermatrix negativ zu beeinflussen. Die Problematik der Feuchtigkeitsaufnahme der Cellulose-Mischung wird vermieden, indem eine zweite transparente Schicht als Schutzschicht auf die erste Schicht aufgetragen wird. Ein derartiger Mehrschichtverbund weist nicht nur eine Reduktion der Product Carbon Footprint (PCF) auf und trägt zur Kreislaufwirtschaft bei, sondern weist auch eine Erhöhung der Festigkeit auf.

Die zweite Schicht ist erfindungsgemäß transparent und auf der Oberseite der ersten Schicht angeordnet. Als "transparent" wird ein Material dann bezeichnet, wenn das Material in der Lage ist, elektromagnetische Wellen im Bereich des für den Menschen sichtbaren Spektralbereichs hindurchzulassen, sodass die Oberfläche des dahinter angeordneten Materials für den Menschen sichtbar ist. In bevorzugten Ausführungsformen kann die zur zweiten Schicht gerichtete Oberfläche der ersten Schicht bedruckt sein. Der Druck kann mit geeigneten Tinten und üblichen Verfahren erfolgen, die der fachkundigen Person bekannt sind. Aufgrund der Transparenz der zweiten Folie kann so der Mehrschichtverbund mit einem beliebigen Design versehen werden, das auch bei mechanischer Belastung beständig bleibt. Ein derartiger Mehrschichtverbund ist deshalb insbesondere zur Verwendung als dekorative Oberfläche, beispielsweise als Fußbodenbelag oder Automobilinnenraum, geeignet.

Vorzugsweise weist die Cellulose-Mischung mindestens 20 Gew.-% Cellulose-haltige Naturfasern, bezogen auf die Gesamtmasse der Cellulose-Mischung, auf. Erfindungsgemäß wird unter Cellulose-haltigen Naturfasern in Anlehnung an DIN-Norm DIN 60 001-1 natürliche, linienförmige Gebilde, die sich textil verarbeiten lassen, verstanden. Vielmehr sind hierunter pflanzliche Naturfasern zu verstehen, die aus Elementarzellen aufgebaut sind. Die Elementarzellen sind wiederum aus zusammengelagerten Fibrillen bestehend aus Cellulose-Molekülen aufgebaut. Üblicherweise setzen sich solche Naturfasern aus den wesentlichen Bestandteilen Cellulose, Hemicellulose und Lignin zusammen. Weitere Inhaltsstoffe variieren je nach Art der Naturfaser. Eine Naturfaser im Sinne der vorliegenden Erfindung besteht aus mindestens 60 Gew.-% reiner Cellulose, bezogen auf die Gesamtmasse der Naturfaser.

Als Cellulose-haltige Naturfasern sind grundsätzlich alle Pflanzenfasern geeignet. Beispielsweise können Naturfasern aus der Liste bestehend aus Samenfasern, Bastfasern, Blattfasern und/oder Fruchtfasern ausgewählt werden.

Vorzugsweise handelt es sich bei der erfindungsgemäßen Cellulose-haltigen Naturfaser um eine aus Wiesengras isolierte Cellulosefaser. Die Cellulose-Fasern sind aufgrund ihrer Temperaturbeständigkeit bis 200 °C, Färbbarkeit und geringen Geruchsemissionen für naturfaserverstärkte Komposite besonders gut geeignet. Wiesengras gehört zur Ordnung der Süßgrasartigen und ist schnellwachsend, z.B. ist das Englische Ryegrass 6 bis 8 Wochen nach Aussaat bereits schnittreif und kann bis zu drei Mal im Jahr geerntet werden. Aus einer Tonne Gras können 152 kg Cellulose-Fasern gewonnen werden. Wiesengras hat hinsichtlich der Nachhaltigkeit den Vorteil, dass es regional, insbesondere auch in Deutschland, Österreich, Polen, erzeugt werden kann. Dadurch entfallen aufwendige Transportwege und es entstehen große Flächen, die während des Wachstums CO₂ aus der Umgebung binden.

Die im Mehrschichtverbund verwendeten thermoplastischen Polymere sind im Wesentlichen nicht beschränkt. Bei den Polyolefinen handelt es sich um gesättigte Kohlenwasserstoffe, die aus Alkenen polymerisiert werden. Geeignete thermoplastische Polyolefine können ausgewählt werden aus der Gruppe bestehend aus Polyethylen (PE), Polypropylen (PP), Polymethylpenten (PMP), Polyisobutylen (PIB), Polybutylen (PB, Polybuten-1) und Mischungen daraus. Besonders bevorzugt sind hierbei Polyethylen und/oder Polypropylen. Geeignete Polyethylene können beispielsweise ausgewählt werden aus der Liste bestehend aus Low Density Polyethylene (LDPE), High Density Polyethylene (HDPE), Linear Low Density Polyethylene (LLDPE) und Mischungen daraus. Geeignete Polypropylene können ausgewählt werden aus der Liste Homo-PP (H-PP), Propylen-Blockcopolymerisat (B-PP), Propylen-Randomcopolymerisate (R-PP) und Mischungen daraus. Vorzugsweise umfasst die erste Schicht mindestens 50 Gew.-%, insbesondere mindestens 70 Gew.-% PE, PP oder einer Mischung aus PE und PP, bezogen auf die Gesamtmasse der ersten Schicht.

In bevorzugten Ausführungsformen umfasst die Cellulose-Mischung mindestens 50 Gew.-% Polyolefine bezogen auf die Gesamtmasse der Cellulose-Mischung. Die Cellulose-haltige Naturfaser ist in diesen Ausführungsformen in der Polyolefinmatrix vordispergiert, um die Verarbeitbarkeit der Naturfaser zu erhöhen und die Kompatibilität zwischen thermoplastischer Matrix und der Naturfaser zu erhöhen. In dieser Ausführungsform sind als Polyolefine insbesondere Polypropylene geeignet. Vorteilhafterweise umfasst die Cellulose-Mischung mindestens 50 Gew.-% eines Homopolymers aus Polypropylen (H-PP).

Die erste Schicht kann von 2 bis 30 Gew.-%, bevorzugt von 2 bis 20 Gew.-%, besondere bevorzugt von 5 bis 20 Gew.-%, ganz besonders bevorzugt 5 bis 15 Gew.-% Cellulose-haltige Naturfaser, bezogen auf die Gesamtmasse der ersten Schicht, umfassen. Je höher der Anteil der Cellulose-haltigen Naturfaser, desto mehr wirkt sich der Füllstoff auf die mechanischen Eigenschaften der Schicht aus. Beispielsweise führt eine sehr große Menge (z.B. über 30 Gew.-%) des Füllstoffs zwar zur Gewichtsreduktion, führt allerdings gleichzeitig zu derartig vielen Materialdefekten, dass der Werkstoff unbrauchbar wird. Eine zu geringe Menge (z.B. unter 2 Gew.-%) des Füllstoffs bleibt im Komposit unbemerkt.

Die erste Schicht umfasst zusätzlich vorzugsweise ein oder mehrere Hilfsmittel. Derartige Hilfsmittel können Pigmente, Vernetzungshilfsmittel, Antioxidationsmittel, Lichtschutzmittel, Gleitmittel und/oder Alterungsschutzmittel sein. Besonders vorteilhafte Antioxidantien sind insbesondere Phenolderivate, Lactone und/oder Phosphite. Besonders geeignete Lichtschutzmittel sind sterisch gehinderte Amine oder Benzotriazine, die zweckmäßig in einer Menge von weniger als etwa 5 Gew.-%, vorzugsweise bis zu 3,5 Gew.-%, insbesondere von 0,2 bis 2,5 Gew.-%, bezogen auf das Gesamtgewicht der Schicht, in die Polymermasse einbezogen werden können.

Die transparente zweite Schicht des Mehrschichtverbunds kann ebenfalls ein thermoplastisches Polyolefin, vorzugsweise Polypropylen und/oder Polyethylen, umfassen. In vorteilhaften Ausführungsformen umfassen die erste und die zweite Schicht die gleichen thermoplastischen Polyolefine. Alternativ oder ergänzend können diese thermoplastischen Polyolefine Rezyklate sein.

In bevorzugten Ausführungsformen ist oberhalb der zweiten Schicht des Mehrschichtverbunds zusätzlich eine dritte Schicht angeordnet. In dieser Ausführungsform umfasst die dritte Schicht mindestens ein Polyurethan. Insbesondere werden Polyurethan-Lacke verwendet. Diese erhöhen die optische Veredlung des Mehrschichtverbunds und verbessern die Kratzfestigkeit der transparenten zweiten Schicht.

Weiterhin kann der Mehrschichtverbund mindestens eine weitere Schicht umfassen, die unterhalb der ersten Schicht angeordnet ist. Diese kann beispielsweise eine geschäumte oder ungeschäumte Schicht umfassend mindestens ein thermoplastisches Polyolefin sein. Als das thermoplastische Polyolefine kann vorzugsweise ein Rezyklat eingesetzt werden. Diese Schicht kann in bevorzugten Ausführungsformen eine Dicke von 0,50 bis 1,50 mm aufweisen.

Der Mehrschichtverbund ist für verschiedene Anwendungen geeignet. In einigen Ausführungsformen kann der Mehrschichtverbund ein Automobilinnenverkleidungsteil sein. Das Automobilinnenverkleidungsteil kann vorzugsweise eine Instrumententafel, eine Mittelkonsole, eine Türverkleidung, eine Seitenverkleidung, eine Heckablage oder eine Laderaumabdeckung sein. Der Mehrschichtverbund kann in weiteren Ausführungsformen eine Dekoroberfläche sein. Solche Dekoroberflächen können grundsätzlich im Innen- und Außenbereich angeordnet sein. Vorzugsweise ist der Mehrschichtverbund eine Säule, Dekorblende oder eine Stauraumverkleidung des Automobilinnenbereich. In anderen Ausführungsformen kann der Mehrschichtverbund ein eine Poolfolie, Fassadenverkleidung oder Türverkleidung sein. Alternativ kann der Mehrschichtverbund ein Bezugsstoff für Polstermöbel sein. In besonders bevorzugten Ausführungsformen ist der Mehrschichtverbund ein Fußbodenbelag, Wandpaneel.

Die Erfindung betrifft außerdem die Verwendung einer Cellulose-Mischung zur Reduzierung des Oberflächenglanzes eines Mehrschichtverbunds, wobei der Mehrschichtverbund mindestens eine erste und eine zweite Schicht aufweist, wobei die zweite Schicht oberhalb der ersten Schicht angeordnet ist und die zweite Schicht transparent ist und wobei die Cellulose-Mischung in der ersten Schicht angeordnet ist. Der Mehrschichtverbund kann dabei irgendeiner der oben beschriebenen Ausführungsformen entsprechen. Vorzugsweise ist der Mehrschichtverbund im Wesentlichen aus thermoplastischen Polymeren aufgebaut. Erfindungsgemäß umfasst die Cellulose-Mischung mindestens Cellulose, die in einer polymeren Matrix vordispergiert ist. Vorzugsweise umfasst die erste Schicht mindestens 3 Gew.-% und maximal 15 Gew.-% Cellulose, insbesondere von 5 bis 11 Gew.-% Cellulose, jeweils bezogen auf das Gesamtgewicht der ersten Schicht. Diese Mengen an Cellulose führen zum reduzierten Oberflächenglanz und maximieren gleichzeitig die Weiterreißfestigkeit des Mehrschichtverbunds.

### Beispiel:

Es wurden Mehrschichtverbunde nach der in Tabelle 1 und 2 dargestellten Rezepturen hergestellt. Die Schichten wurden jeweils zu 0,5 mm dicken Folien extrudiert. Die Extrusion wurden an einem Laborextruder mit einer Drehzahl von 1200 Min⁻¹ und einem L/D = 44D bei 150-170°C durchgeführt. Die Mengenangabe bezieht sich auf Gewichtsteile der reinen Polymermischung (Teile auf 100 Teile Polymer). In Tabelle 1 ist eine beispielhafte Rezeptur für die erste Schicht gezeigt. Der Wiesengras-Masterbatch umfasst 30 Gew.-% Cellulosefasern aus Wiesengras und 70 Gew.-% eines h-PP.

**Tabelle 1: Zusammensetzung der jeweils ersten Schicht**

| **Faseranteil in %** | **3** | **6** | **9** | **12** |
|---|---|---|---|---|
| **Zusammensetzung** | **Rezeptur in Teile** | | | |
| Random PP | 30 | 30 | 30 | 30 |
| LLDPE | 60 | 50 | 40 | 30 |
| Wiesengras Masterbatch | 10 | 20 | 30 | 40 |
| Stabilisator | 2 | 2 | 2 | 2 |
| Pigment | 2 | 2 | 2 | 2 |

**Tabelle 2**

| | | DIN EN ISO 1133 | DIN EN ISO 1183 |
|---|---|---|---|
| **Zusammensetzung** | **Teile** | **MFI (2,16kg/230 °C)** | **Dichte** |
| Random PP | 30 | 0,3 g/10 min | 0,895 g/cm³ |
| LLDPE | 70 | 0,5 g/10 min | 0,868 g/cm³ |
| Stabilisator | 2 | | |

Der Wiesengras-Masterbatch weist die in Tabelle 3 gezeigten Eigenschaften auf. Der MFI des eingesetzten h-PP betrug 5 g/10 min (2,16 kg/ 230 °C), gemessen nach DIN EN ISO 1133.

**Tabelle 3**

| | | |
|---|---|---|
| Dichte | 0,977 g/cm³ | DIN EN ISO 1183 |
| Biege-E-Modul | 1650 Mpa | DIN EN ISO 178 |
| MFI | 9,8 g/10 min (2,16 kg/ 230 °C) | DIN EN ISO 1133 |

Die Ergebnisse der mechanischen Tests sind in Tabelle 4 dargestellt. Das Vergleichsbeispiel weist die gleiche Rezeptur auf wie die erste Sicht, wobei kein Wiesengras-Masterbatch hinzugefügt wurde. Die Weiterreißfestigkeit wurde nach DIN EN ISO 34 bestimmt.

**Tabelle 4**

| | | **Vergleichsbeis piel** | **Beispiel 1** | **Beispiel 2** | **Beispiel 3** | **Beispiel 4** |
|---|---|---|---|---|---|---|
| | **Faseranteil in %** | **Referenz** | **3** | **6** | **9** | **12** |
| **Weiterreißfestig keit in Mpa** | **längs** | 2,3 | 2,8 | 2,4 | 3,25 | 2,7 |
| | **quer** | 2,25 | 2,75 | 2,2 | 2,65 | 2,75 |
| **Extrusionsverhal ten** | | in Ordnung | in Ordnung | in Ordnung | in Ordnung | in Ordnung |
| | | | | | | |
| **Glanz** | | 9 bis 10 | 4 bis 5 | 3 bis 4 | 2 bis 3,5 | 1,5 bis 2,5 |
| | | angenehm | angeneh m | angeneh m | angeneh m | angeneh m |

An den Ergebnissen ist zu erkennen, dass der erfindungsgemäße Mehrschichtverbund einen abnehmenden Oberflächenglanz und eine verbesserte Weiterreißfestigkeit aufweist.

## Patentansprüche

1. Mehrschichtverbund aufweisend mindestens eine erste Schicht und eine zweite Schicht, wobei die zweite Schicht oberhalb der ersten Schicht angeordnet ist und wobei die zweite Schicht transparent ist, **dadurch gekennzeichnet, dass** die erste Schicht mindestens ein thermoplastisches Polymer und eine Cellulose-Mischung umfasst.

2. Mehrschichtverbund nach Anspruch 1, wobei die Cellulose-Mischung mindestens 20 Gew.-% Cellulose-haltige Naturfasern und mindestens 50 Gew.-% eines thermoplastischen Polymers umfasst, jeweils bezogen auf die Gesamtmasse der Cellulose-Mischung.

3. Mehrschichtverbund nach Anspruch 2, wobei die Cellulose-haltige Naturfaser eine aus Wiesengras isolierte Cellulosefaser ist.

4. Mehrschichtverbund nach einem der Ansprüche 1 bis 3, wobei das Polymer ein thermoplastisches Polyolefin, vorzugsweise Polyethylen und/oder Polypropylen, ist.

5. Mehrschichtverbund nach einem der vorhergehenden Ansprüche, wobei die transparente zweite Schicht ein thermoplastisches Polymer, vorzugsweise Polypropylen und/oder Polyethylen, umfasst.

6. Mehrschichtverbund nach einem der vorhergehenden Ansprüche, wobei die zur zweiten Schicht gerichtete Oberfläche der ersten Schicht bedruckt ist.

7. Mehrschichtverbund nach einem der vorhergehenden Ansprüche, wobei oberhalb der zweiten Schicht zusätzlich eine dritte Schicht angeordnet ist und wobei die dritte Schicht mindestens ein Polyurethan umfasst.

8. Mehrschichtverbund nach einem der Ansprüche 2 bis 7, wobei die erste Schicht von 2 bis 15 Gew.-% Cellulose-haltige Naturfaser, bezogen auf die Gesamtmasse der ersten Schicht, umfasst.

9. Mehrschichtverbund nach einem der Ansprüche 1 bis 8, **dadurch gekennzeichnet, dass** er Automobilinnenverkleidungsteil, eine Dekoroberfläche, Poolfolie, Fassadenverkleidung, Türverkleidung, ein Bezugsstoff für Polstermöbel, ein Fußbodenbelag oder ein Wandpaneel.

10. Verwendung einer Cellulose-Mischung zur Reduzierung des Oberflächenglanzes eines Mehrschichtverbunds, wobei der Mehrschichtverbund mindestens eine erste und eine zweite Schicht aufweist, wobei die zweite Schicht oberhalb der ersten Schicht angeordnet ist und die zweite Schicht transparent ist und wobei die Cellulose-Mischung in der ersten Schicht angeordnet ist.
